# EUROPÄISCHE PATENTSCHRIFT

(11) **EP 2 275 318 B1**
(45) Veröffentlichungstag und Bekanntmachung des Hinweises auf die Patenterteilung: **09.01.2013**
(21) Anmeldenummer: 10007301.4
(22) Anmeldetag: 15.07.2010
(51) Int. Cl.: B60W 30/16, G05D 1/02, G01S 13/93

(54) **Verfahren zur Ermittlung eines Ein- oder Ausschervorgangs eines dem eigenen Kraftfahrzeug vorausfahrenden Fahrzeugs**
Method for determining whether a motor vehicle in front is changing lane
Procédé de détermination d'un processus de changement ou de sortie de fil d'un véhicule se trouvant à l'avant de son propre véhicule automobile

(30) Priorität: 15.07.2009 DE 102009033124
(43) Veröffentlichungstag der Anmeldung: 19.01.2011
(73) Patentinhaber: AUDI AG, 85045 Ingolstadt (DE); Audi Electronics Venture GmbH, 85080 Gaimersheim (DE)
(72) Erfinder: Schuberth, Stefan, 85057 Ingolstadt (DE); Limbacher, Reimund, 85055 Ingolstadt (DE)
(74) Vertreter: Thielmann, Frank

(56) Entgegenhaltungen:
- EP-A1- 1 577 682
- EP-A1- 1 643 269
- DE-A1-102007 013 992
- US-A1- 2004 016 870
- YOUNG E ET AL: "Improved obstacle detection by sensor fusion" 19920101, 1. Januar 1992 (1992-01-01), Seiten 2/1-2/6, XP006521317

## Beschreibung

Die Erfindung betrifft ein Verfahren zur Ermittlung eines Ein- oder Ausschervorgangs eines dem eigenen Kraftfahrzeug vorausfahrenden Fahrzeugs, wobei das eigene Kraftfahrzeug ein der Längsführung dienendes Fahrerassistenzsystem und eine das Fahrzeugvorfeld in Form zweidimensionaler Bilder aufnehmenden Kamera umfasst.

Derartige Fahrerassistenzsysteme zur Längsführung dienen dazu, das eigene Fahrzeug automatisch relativ zu einem vorausfahrenden Fahrzeug zu führen, also beispielsweise einen definierten Abstand einzuhalten oder bei einer Beschleunigung oder Verzögerung des vorausfahrenden Fahrzeugs das eigene Fahrzeug entsprechend nachzuführen etc. Hierzu umfasst ein solches Längsführungssystem, häufig ACC-System (ACC = adaptive cruise control) oder Kollisionsvermeidungssystem genannt, Messsensoren, üblicherweise in Form von Radar- oder Lidarsensoren, die das Fahrzeugvorfeld erfassen und über die ein vor dem eigenen Fahrzeug fahrendes Fahrzeug erkannt werden kann. Um ein für die Längsführung relevantes Objekt bestimmen zu können wird zum einen ein virtueller Fahrschlauch vor dem eigenen Fahrzeug definiert, der die prognostizierte Fahrrichtung des eigenen Fahrzeugs abbildet. Die Objektbestimmung erfolgt nun durch Auswertung des lateralen, also seitlichen Abstands eines vorausfahrenden Fahrzeugs sowie der lateralen Geschwindigkeit dieses Fahrzeugs, also der Geschwindigkeit, mit welcher sich das vorausfahrende Fahrzeug in Richtung der Fahrschlauchbegrenzung bewegt, sei es beim Einscheren oder Ausscheren in oder aus dem Fahrschlauch. Diese Erfassung ist wichtig, nachdem beispielsweise ein einscherendes Fahrzeug als ein solches erkannt werden muss, nachdem dieses sich dann im Fahrschlauch befindliche Fahrzeug als "Regelfahrzeug" nachfolgend zu berücksichtigen ist.

EP 1 577 682 A1 betrifft ein Objektortungssystem für Kraftfahrzeuge mit einer Erkennungseinrichtung für Ein- und Ausschervorgänge. Die Erkennungseinrichtung weist einen Zustandsautomaten auf, der jedem georteten Ort einen von mehreren vordefinierten, auf die Querposition des Objekts bezogenen Zuständen zuweist und die Zustandszuweisungen wiederholt anhand der jeweils neuesten Ortungsdaten aktualisiert. Dabei stellt mindestens einer der vordefinierten Zustände einen Ein- oder Ausschervorgang dar.

Insbesondere im Nahbereich bis ca. 60 m jedoch werden vorausfahrende Fahrzeuge bei Einschervorgängen erst relativ spät als relevant erfasst, ausscherende Fahrzeuge werden erst relativ spät als ausscherend beurteilt und losgelassen, d. h., dass sie nicht weiter der Regelung zugrunde liegen. Diese relativ späte Reaktion des Fahrerassistenzsystems auf solche Ein- oder Ausscherfahrzeuge resultiert aus Unsicherheiten bei der genauen Spurzuordnung der Objekte zur eigenen Fahrspur, hier also dem virtuellen Fahrschlauch. Dieser virtuelle Fahrschlauch ist zu bilden, nachdem die Messsensoren die Erfassung der eigentlichen Fahrspur nicht zulassen, weshalb Fahrzeugdaten des eigenen Fahrzeugs sowie bekannte Umfelddaten ausgewertet und hieraus ein wahrscheinlicher Fahrschlauch, der also die eigene Fahrtrichtung abbildet, prädiziert wird.

Der Erfindung liegt das Problem zugrunde, ein Verfahren anzugeben, das eine verbesserte Erfassung ein- oder ausscherender Fahrzeuge ermöglicht.

Zur Lösung dieses Problems ist erfindungsgemäß vorgesehen, dass in einem aufgenommenen Bild wenigstens eine die eigene befahrende Fahrspur begrenzende Fahrbahnmarkierung und wenigstens ein von einem vorausfahrenden Fahrzeug definierter Bildpunkt oder Bildabschnitt detektiert wird, worauf unter Berücksichtigung eines ein Maß für den realen Abstand des Fahrzeugs zum eigenen Kraftfahrzeug darstellenden Werts der reale horizontale Abstand des ausgezeichneten Bildpunkts oder Bildabschnitts zur Fahrbahnmarkierung ermittelt wird, der als Maß für die Ermittlung eines Ein- oder Ausschervorgangs dient.

Das erfindungsgemäße Verfahren nutzt zur Ermittlung des lateralen oder horizontalen Abstands die von der fahrzeugseitigen Kamera kontinuierlich aufgenommenen zweidimensionalen Bilder, die das Fahrzeugvorfeld abbilden. Diese werden von einer Steuerungseinrichtung des Fahrerassistenzsystems, die entsprechende Auswertealgorithmen umfasst, zunächst dahingehend ausgewertet, dass wenigstens eine, vorzugsweise die beiden die eigene Fahrspur begrenzenden Fahrbahnmarkierungen, seien es gestrichelte oder durchgezogene Linien, ermittelt werden, was mit geeigneten Bildanalysealgorithmen ohne Weiteres möglich ist. Weiterhin wird seitens der Steuerungseinrichtung ein Bildpunkt oder ein Bildabschnitt, der von einem vorausfahrenden, im Bild gezeigten Fahrzeug definiert wird bzw. einem solchen zuzuordnen ist, mit geeigneten Analysealgorithmen detektiert. Gestützt auf diese durch die Bildauswertung erhaltene Informationen wird nun unter Berücksichtigung eines ein Maß für den realen Abstand des Fahrzeugs zum einen Kraftfahrzeug darstellenden Werts, also eines Entfernungswerts, der reale horizontale Abstand des ausgezeichneten definierten Bildpunkts oder Bildabschnitts des vorausfahrenden Fahrzeugs zur Fahrbahnmarkierung ermittelt. D. h., dass zu jedem aufgenommenen Bild (bei hoher Bildaufnahmerate gegebenenfalls auch zu jedem zweiten oder jedem dritten Bild) der reale horizontale (oder laterale) Abstand des Fahrzeugpunkts oder Fahrzeugabschnitts, der zuvor im Bild analysiert wurde, ermittelt wird. Hieraus kann ohne Weiteres erfasst werden, ob und mit welcher Geschwindigkeit sich ein vorausfahrendes Fahrzeug tatsächlich der eigenen Fahrbahnbegrenzung nähert, wobei mit besonderem Vorteil beim erfindungsgemäßen Verfahren die tatsächliche eigene Fahrspur, begrenzt über die ermittelten Fahrbahnmarkierungen, zur Bestimmung eines Ein- oder Ausschervorgangs herangezogen wird und nicht ein virtueller Fahrschlauch, der die tatsächliche Fahrspur mitunter nicht hinreichend genau abbildet.

Gerade im Nahbereich bis ca. 60 m, gegebenenfalls auch weiter, ist es legitim, als Begrenzungen der eigenen Fahrspur direkt die detektierten Spurmarkierungen zu verwenden, was zu einer genaueren Erfassung möglicher Ein- oder Ausschervorgänge führt. Nachdem der virtuelle Fahrschlauch aus gegebenen Fahrzeugdaten abgeleitet wird, beispielsweise unter Berücksichtigung des Lenkwinkels etc., kann zwangsläufig der Fall auftreten, dass beispielsweise ein gerade Fahrschlauch ermittelt wird, während tatsächlich die Fahrspur eine leichte Kurve beschreibt bzw. eine solche unmittelbar folgt. Vorausfahrende Fahrzeuge, die sich bereits in diesem Bereich befinden, und sich der Fahrbahnmarkierung, also der eigenen Fahrspur nähern bzw. in diese einfahren, werden mitunter nicht oder viel zu spät erfasst, da das System letztlich von einer geraden Fahrspur ausgeht. Dies wird beim erfindungsgemäßen Verfahren mit besonderem Vorteil vermieden, da zur Ermittlung etwaiger Ein- oder Ausschervorgänge wie beschrieben auf reale Fahrbahnmarkierungen zurückgegriffen wird, mithin also die Ist-Fahrspur zugrunde gelegt wird, und nicht ein aus Ego-Fahrzeugdaten abgeleiteter virtueller Fahrschlauch.

Ein im Bild gezeigtes vorausfahrendes Fahrzeug kann beispielsweise unmittelbar in seiner rückseitigen Ansicht ermittelt und ein bestimmter Bildpunkt oder Bildabschnitt ausgewählt werden. Denkbar ist es aber auch, als ausgezeichneten Bildpunkt oder Bildabschnitt das im Bild gezeigte untere Eck einer das im Bild erfasste Fahrzeug umgebenden dargestellten oder virtuellen Bildmarkierung zu verwenden. Der Analysealgorithmus, beispielsweise ein Kantendetektionsalgorithmus, kann also das vorausfahrende Fahrzeug ermitteln und diese zur weiteren Datenverarbeitung mit einem viereckigen Rahmen markieren, der im Wesentlichen entlang der Fahrzeuggrenzen verläuft. Nachdem das linke oder rechte untere Eck fahrbahnnah ist, gibt dieser Punkt oder dieser Abschnitt die tatsächliche Lage des Fahrzeugs relativ zur Fahrbahn an, weshalb es zweckmäßig ist, diesen nachfolgend weiterzubetrachten.

Wie einleitend beschrieben, erfolgt die Ermittlung des realen horizontalen Abstands dieses Bildpunkts oder Bildabschnitts zur Fahrbahnmarkierung unter Berücksichtigung eines ein Maß für den realen Abstand des vorausfahrenden Fahrzeugs zum eigenen Kraftfahrzeug darstellenden Werts. Zur Ermittlung dieses realen Abstands sind zwei unterschiedliche Verfahrensvarianten denkbar. Nach einer ersten Verfahrensausgestaltung wird der ein Maß für den realen Abstand darstellende Wert anhand der Anzahl an Pixeln einer vertikalen Pixellinie des Bildes von einer definierten horizontalen Pixellinie, insbesondere der Bildunterkante, zu dem detektierten Bildpunkt oder Bildabschnitt des Fahrzeugs ermittelt. Dieser Ermittlungsmethode liegt der Gedanke zugrunde, dass - ausgehend von einer im Wesentlichen horizontalen Fahrbahn - der reale Abstand in einem definierten geometrischen Zusammenhang mit der Position, an der der Bildpunkt oder Bildabschnitt im Bild gezeigt ist, steht. Es wird nun die Anzahl an Pixeln einer vertikalen Pixellinie bestimmt, die beispielsweise vertikal von der unteren Bildkante, deren Relativlage zum eigenen Fahrzeug in Folge der feststehenden Kameraposition bekannt ist, zu dem Bildpunkt oder dem Bildabschnitt ermittelt. Je länger diese Pixellinie ist, je mehr Pixel sie also umfasst, umso größer ist der Abstand, je weniger Pixel die Linie umfasst, umso geringer ist der Abstand. Hieraus kann sehr genau der reale Abstand zwischen den beiden Fahrzeugen bestimmt werden.

Eine alternative Ausgestaltung für die Ermittlung des ein Maß für den realen Abstand darstellenden Werts besteht darin, diesen mittels wenigstens einem Abstandsmesssensor, beispielsweise eines Radar- oder Lidarsensors, zu ermitteln und an die Steuerungseinrichtung zu übergeben. Hier wird also der reale Abstand nicht aus dem Bild ermittelt, sondern über die Sensorsignale erfasst, wobei die Sensoren ohnehin Teil des Längsführungssystems sind. Auch hierüber kann mit hoher Genauigkeit der reale Abstand erfasst werden.

Auch um den realen horizontalen oder lateralen Abstand zwischen dem ausgezeichneten definierten Bildpunkt oder Bildabschnitt und der Fahrbahnmarkierung bzw. einem ausgezeichneten Punkt auf dieser zu bestimmen, sind zwei unterschiedliche Verfahrensvarianten denkbar. Nach einer ersten Verfahrensalternative ist vorgesehen, dass der reale horizontale Abstand anhand der Anzahl an Pixeln einer horizontalen Pixellinie des Bilds von dem detektierten Bildpunkt oder Bildabschnitt zur detektierten Fahrbahnmarkierung ermittelt wird. Auch hier wird also die tatsächliche Pixelanzahl ermittelt. Nachdem bekannt ist, in welcher "vertikalen Höhe" diese horizontale Pixellinie im Bild verläuft, ist daraus zwangsläufig auch bekannt, welcher horizontalen Länge ein Pixel respektive ein Pixelabstand entspricht. Je "höher" diese horizontale Linie im Bild verläuft, umso größer ist die reale Länge, die über den Abstand zweier Pixel definiert wird, je "niedriger" diese horizontale Linie verläuft, umso kürzer ist diese Strecke. D. h., dass anhand der Pixelanzahl der reale horizontale Abstand ohne Weiteres und sehr genau ermittelt werden kann. Über die zeitliche Veränderung dieses horizontalen Abstands zwischen nachfolgend aufgenommenen Bildern kann so ohne Weiteres ein Einoder Ausschervorgang erfasst werden. Diese Verfahrensvariante ermöglicht in Verbindung mit der Bestimmung des Fahrzeugabstands ebenfalls anhand der Bildanalyse die Bestimmung eines Einscher- oder Ausschervorgangs allein anhand einer Bildanalyse, ohne auf andere Messwerte zurückzugreifen, wobei dies als Alternative zur Ermittlung des Fahrzeugabstands aus dem Bild selbstverständlich wie beschrieben möglich ist.

Eine zweite Verfahrensvariante zur Bestimmung des realen horizontalen Abstands sieht vor, diesen gestützt auf eine Winkelbetrachtung im Rahmen der Bildanalyse zu bestimmen. Hierzu wird der reale horizontale Abstand anhand des aus dem Bild ermittelten Winkels zwischen zwei Linien, die gemeinsam von einem definierten Startpunkt im Bild, der insbesondere der Position der Kamera entspricht (also beispielsweise der Bildmitte), ausgehen, wobei die eine Linie zum detektierten Bildpunkt oder Bildabschnitt und die andere zu der Fahrspurmarkierung läuft und jeweils den Bildpunkt oder Bildabschnitt und die Fahrspurmarkierung auf gleicher Horizontalebene schneiden, sowie dem ermittelten realen Abstand entlang der zum detektierten Bildpunkt oder Bildabschnitt laufenden Linie ermittelt. Es wird hier also der Öffnungswinkel der beiden Linien bestimmt. Als weiterer Eingangsparameter ist ferner der reale Abstand zwischen dem eigenen Fahrzeug und dem vorausfahrenden Fahrzeug bekannt, wobei der reale Abstand im Wesentlichen entlang der Linie bestimmt wird, die im Bild zum Bildpunkt oder zum Bildabschnitt gelegt wird. Dieser Abstand kann entweder wie beschrieben aus dem Bild ermittelt werden, so dass der Abstand quasi exakt entlang dieser Linie berechnet wird, alternativ kann er auch über das Abstandsmesssensorsignal bestimmt werden, wobei der Abstand dann nicht absolut exakt entlang der Linie ermittelt wird, nachdem der Abstandssensor gegebenenfalls versetzt zur Kameraposition angeordnet ist Jedoch erfolgt in jedem Fall eine Abstandsermittlung, die im Wesentlichen den dem Linienverlauf entsprechenden realen Abstand wiedergibt.

Anhand dieser Informationen, nämlich dem Öffnungswinkel der Linien und dem realen Abstand zum Bildpunkt kann nun ohne Weiteres der horizontale Abstand zwischen dem Bildpunkt oder Bildabschnitt und der Fahrspurmarkierung ermittelt werden. Denn über diese horizontale Linie wird das "virtuelle" Dreieck geschlossen, das dieser Berechnung hier zugrunde liegt, wobei dieses "Dreieck" gebildet wird aus den beiden Linien und der sie verbindenden Horizontallinie, die zwischen dem Bildpunkt oder Bildabschnitt und der Fahrspurmarkierung verläuft. Auch durch diese Verfahrensalternative kann mit hoher Genauigkeit der tatsächliche horizontale Abstand bestimmt werden.

Neben dem Verfahren betrifft die Erfindung ferner ein Kraftfahrzeug geeignet zur Durchführung des Verfahrens, umfassend ein der Längsführung dienendes Fahrerassistenzsystem mit einer Steuerungseinrichtung und eine des Fahrzeugvorfeld in Form zweidimensionaler Bilder aufnehmenden Kamera. Das Kraftfahrzeug zeichnet sich erfindungsgemäß dadurch aus, dass die mit der Kamera kommunizierende Steuerungseinrichtung zur Detektion wenigstens einer die eigene befahrene Fahrspur begrenzenden Fahrbahnmarkierung und wenigstens eines von einem vorausfahrenden Fahrzeug definierten Bildpunkts oder Bildabschnitts in einem aufgenommenen Bild sowie zur Ermittlung des realen horizontalen Abstands des Bildpunkts oder Bildabschnitts zur Fahrbahnmarkierung, welcher Abstand als Maß für die Ermittlung eines Ein- oder Ausschervorgangs dient, unter Berücksichtigung eines ein Maß für den realen Abstand des Fahrzeugs zum eigenen Kraftfahrzeug darstellenden Werts, sowie zur Steuerung des Längsführungssystems unter Berücksichtigung des Ermittlungsergebnisses ausgebildet ist. Die systemseitige Steuerungseinrichtung verfügt demzufolge über geeignete Auswerte- und Analysealgorithmen, um je nach Verfahrensausgestaltung die entsprechenden Parameter aus dem Bild zu erfassen respektive Messwerte der Sensoren aufzunehmen und zu verarbeiten etc. Anhand des zeitlichen Verlaufs respektive der Änderung der ermittelten horizontalen Abstandswerte kann die Steuerungseinrichtung einen Ein- oder Ausschervorgang ermitteln, wobei die Ermittlungsergebnisse der nachfolgenden Steuerung des Längsführungssystems zugrunde liegen.

Weitere zweckmäßige Erfindungsausgestaltungen des Kraftfahrzeugs sind den Unteransprüchen zu entnehmen.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung eines erfindungsgemäßen Kraftfahr- zeugs,
- Fig. 2: eine Prinzipdarstellung einer Verkehrssituation zur Erläuterung des erfindungsgemäßen Verfahrens gemäß einer ersten Aus- führungsform,
- Fig. 3: eine Prinzipdarstellung eines zweidimensionalen Kamerabildes bezogen auf die Verkehrssituation gemäß Fig. 2 und
- Fig. 4: eine Prinzipdarstellung eines weiteren Kamerabildes zur Erläu- terung des Verfahrens gemäß einer zweiten Ausführungsvari- ante.

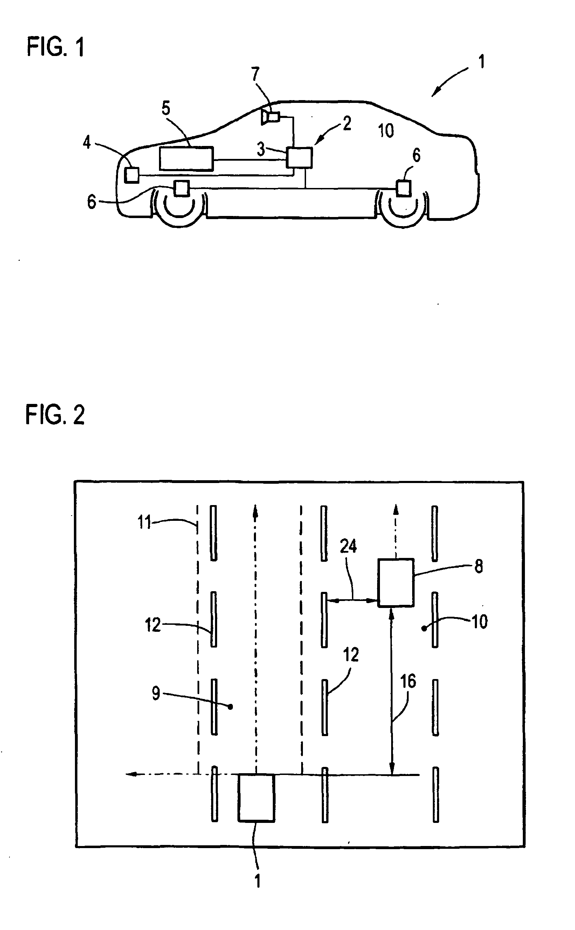

Fig. 1 zeigt ein erfindungsgemäßes Kraftfahrzeug 1, umfassend ein Längsführungssystem 2, beispielsweise ein ACC-System. Dieses umfasst eine Steuerungseinrichtung 3 sowie einen oder mehrere an der Fahrzeugfront angeordnete Abstandsmesssensoren 4, beispielsweise Radarsensoren. Über die Steuerungseinrichtung 3 kann je nach Verkehrssituation das Fahrzeug automatisch längs geführt werden, wozu diese mit dem Antriebsaggregat 5 sowie dem Bremssystem 6 kommuniziert bzw. diese entsprechenden Systeme ansteuern kann. Vorgesehen ist ferner eine Kamera 7, die in Form zweidimensionaler Videobilder das Fahrzeugvorfeld erfasst. Der Aufbau sowie die Funktion eines solchen Längsführungssystems 2 ist hinlänglich bekannt, auch der Einsatz von Kameras zur Fahrzeugvorfeldbeobachtung.

Fig. 2 zeigt in Form einer Prinzipdarstellung eine Verkehrssituation, wobei das eigene Kraftfahrzeug 1 sowie ein vorausfahrendes Kraftfahrzeug 8 dargestellt ist. Das eigene Kraftfahrzeug fährt auf einer ersten Fahrspur 9, während das zweite Fahrzeug 8 auf einer parallelen Fahrspur 10 einer Autobahn fährt. Zu beiden Fahrzeugen ist jeweils die Fahrtrichtung über die strichpunktierten Pfeillinien dargestellt.

Während bei bisher bekannten Verfahren anhand der gegebenen Fahrzeugdaten respektive Betriebsparameter des eigenen Kraftfahrzeugs 1 ein präzidierter virtueller Fahrschlau 11 ermittelt wurde und der horizontale oder seitliche Abstand des Fahrzeugs 8 zu diesem Fahrschlauch 11 ermittelt und zur Beurteilung einer möglichen seitlichen Bewegung des Fahrzeugs 1 in den Fahrschlauch 11 hinein zugrunde gelegt wurde, sieht das erfindungsgemäße Verfahren unter Verwendung der von der Kamera 7 aufgenommene zweidimensionalen Fahrzeugvorfeldbilder die tatsächliche Ermittlung der realen Fahrspur 9 vor. Die Ermittlung des Fahrschlauchs 11 ist insofern nicht immer den realen Verhältnissen entsprechend, wie exemplarisch in Fig. 2 gezeigt ist. Das eigene Fahrzeug 1 fährt leicht versetzt zur Mitte der Fahrspur 9, die über die seitlichen Fahrbahnmarkierungen 12 begrenzt wird. Ersichtlich ist folglich auch der bezüglich der Fahrzeugmitte errechnete Fahrschlauch 11 seitlich versetzt. Würde nun das Kraftfahrzeug 8 nach links driften und beginnen, auf die Fahrspur 9 zu wechseln, so würde der Fahrschlauch 11 erst zu einem späteren Zeitpunkt "berührt", also in diesen eingefahren, verglichen mit der "Berührung" oder Überfahrt der rechten Fahrbahnmarkierung 12, welcher Zeitpunkt letztlich der realen Einfahrt auf die Fahrspur 9 entspricht.

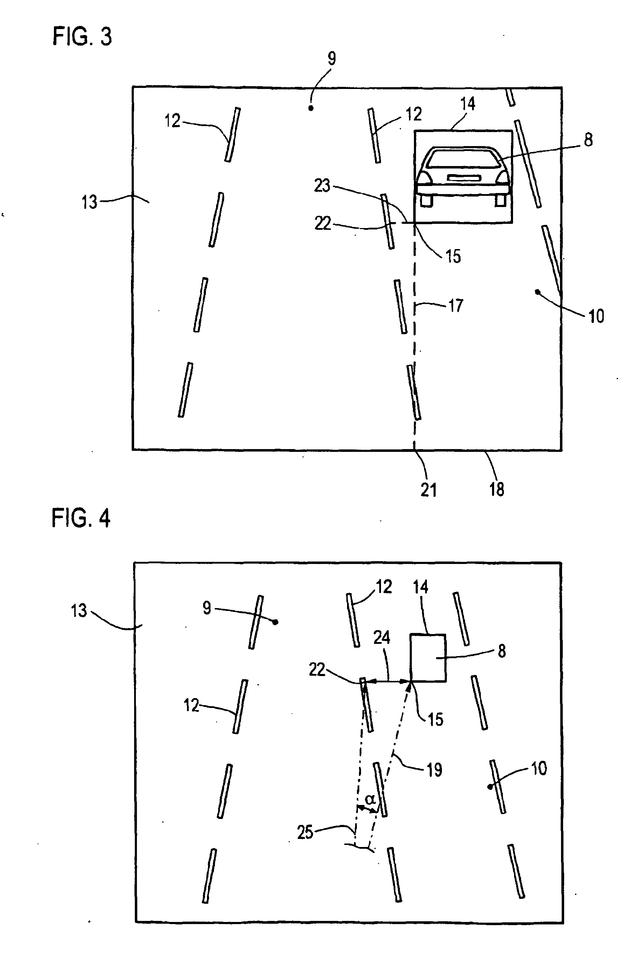

Das erfindungsgemäße Verfahren lässt nun unter Berücksichtigung der realen Fahrspur 9 die Ermittlung eines einscherenden Objekts, ausgehend von der Fahrsituation gemäß Fig. 2, zu. Fig. 3 zeigt exemplarisch ein quasi vertikal auf der Fahrbahn "stehendes" zweidimensionales Bild 13, wie es über die Kamera 7 im Zeitpunkt t aufgenommen wird. Gezeigt ist die Fahrspur 9, ferner die beiden Fahrspurmarkierungen 12, deren Lage respektive Verlauf über einen entsprechenden Analysealgorithmus der Steuerungseinrichtung 3 aus den Bilddaten ermittelt wird. Im aus einzelnen Pixeln aufgebauten Bild gezeigt ist ferner das Fahrzeug 8. Ein entsprechender Analysealgorithmus der Steuerungseinrichtung erkennt nun dieses auf der Fahrspur 10 befindliche Fahrzeug 8 durch geeignete Kantendetektion oder dergleichen. Es wird nun eine Bildmarkierung 14 um dieses Fahrzeug 8 gelegt, hier ein Viereck, das aufgrund seiner Geometrie einen definierten Eckpunkt 15 besitzt, der als definierter Bildpunkt der weiteren Betrachtung zugrunde gelegt wird. Diese Bildmarkierung 14 ist üblicherweise virtueller Natur, also im Bild nicht dargestellt und dient lediglich der Verfahrensdurchführung.

Im nächsten Schritt wird nun der reale Abstand 16 des Fahrzeugs 8 vom eigenen Fahrzeug 1 ermittelt, wie er in Fig. 2 dargestellt ist. Diese Ermittlung erfolgt durch weitere Auswertung des aufgenommenen Bildes 13. Hierzu wird die Anzahl an Pixeln längs einer Pixellinie 17, die vertikal im Bild verläuft, ermittelt. Diese Pixellinie 17 verläuft von der Bildunterkante 18 zum Bildpunkt 15, hier also dem linken unteren Eck der Bildmarkierung 14. Je mehr Pixel die Pixellinie 17 umfasst, umso größer ist der Abstand. Hierbei eine im Wesentlichen ebene Fahrbahn vorausgesetzt. Sofern die Fahrbahn ansteigt oder abfällt, könnte dies im Rahmen der Abstandsermittlung berücksichtigt werden, sofern der Steigungsgrad bekannt ist, beispielsweise abgeleitet aus Informationen eines Navigationssystems oder dergleichen. In jedem Fall kann aufgrund der geometrischen Zusammenhänge und der Kenntnis, wie das Kamerabild als zweidimensionales Bild letztlich verzerrt ist, der reale Abstand 16 ermittelt werden.

In jedem Fall kann hierüber ein Wert für den realen Abstand des Fahrzeugs 8 zum eigenen Kraftfahrzeug 1 allein aufgrund der Bildanalyse anhand der Pixelanzahl längs der Pixellinie 17 bestimmt werden.

Aus der Kenntnis des tatsächlichen Abstands kann nun der horizontale Abstand des Bildpunkt 15 zur benachbarten Fahrbahnmarkierung 12 bzw. eine horizontal benachbart zum Bildpunkt 15 liegenden Fahrbahnmarkierungspunkt 22 ermittelt werden. Auch hierbei wird die Anzahl an Pixeln längs der horizontalen Pixellinie 23 ermittelt. Aus der Kenntnis des realen Abstands des Fahrzeugs 8 zum eigenen Fahrzeug kann nun weiterhin ermittelt werden, welchem realen Abstand ein Pixelabstand zweier benachbarter Pixel der in dieser "Höhe" im Bild verlaufenden Pixellinie 23 entspricht. Hieraus kann nun wiederum der tatsächliche Abstand zwischen dem Bildpunkt 15 und dem Fahrbahnmarkierungspunkt 22 errechnet werden. Dieser reale Abstand ist über die Pfeillinie 24 in Fig. 2 gezeigt.

Auf diese Weise wird nun beispielsweise zu jedem oder zu jedem zweiten aufgenommenen Videobild der reale Abstand 24 ermittelt. Je nachdem, wie sich dieser zeitlich ändert, kann auf einen möglichen Einschervorgang geschlossen werden, wobei dieser Einschervorgang bezogen auf die reale Fahrbahn 9 bzw. deren Markierung 12 ermittelt wird.

Fig. 4 zeigt schließlich ein weiteres Kamerabild 13, das letztlich dem Kamerabild 13 aus Fig. 3 entspricht. Anhand von Fig. 4 wird eine weitere Verfahrensaltemative erläutert. Soweit möglich werden für gleiche Gegenstände die gleichen Bezugszeichen verwendet. Gezeigt ist wiederum die Fahrspur 9 des eigenen Fahrzeugs 1, begrenzt über die beiden Fahrbahnmarkierungen 12, sowie die Fahrspur 10 des Fahrzeugs 8, zu dem hier lediglich die Bildmarkierung 14 dargestellt ist. Auch hier wird wiederum der linke untere Eckpunkt der Bildmarkierung 14 als im Rahmen des Verfahrens zu berücksichtigender ausgezeichneter und von der Position des Fahrzeugs 8 definierter Bildpunkt 15 verwendet.

Im Falle eines Ausschervorgangs wird der horizontale Abstand des sich zwischen den beiden Fahrspurmarkierungen 12 befindlichen Fahrzeugs 8 zur jeweiligen benachbarten Fahrspurmarkierung 12, hier also den beiden Markierungen 12, ermittelt und dessen jeweilige zeitliche Änderung ausgewertet.

Bei dieser Verfahrensvariante ermittelt die Steuerungseinrichtung 3 zunächst den Öffnungswinkel α zwischen den beiden Linien 19 und 25. Die Linien 19 und 25 laufen quasi vertikal in die Bildebene, sie sind hier nur aus Gründen der Erläuterung in dieser Weise dargestellt und deshalb auch nur "abgebrochen" gezeichnet. Die beiden Linien 19 und 25 gehen beide vom gemeinsamen Bildmittelpunkt, der dem Kameramittelpunkt oder -befestigungspunkt entspricht, aus. Die Linie 19, selbstverständlich lediglich eine virtuelle, der Berechnung zugrunde liegende Linie, läuft in den Bildpunkt 15, während die Linie 25, ebenfalls lediglich eine der Berechnung zugrunde zu legende virtuelle Linie, in den Fahrbahnmarkierungspunkt 22, der horizontal benachbart zum Bildpunkt 15 liegt, läuft. Zwischen beiden ergibt sich der Öffnungswinkel α.

Der Steuerungseinrichtung 3 ist nun weiterhin der reale Abstand zwischen dem eigenen Kraftfahrzeug 1 und dem Fahrzeug 8 bekannt, wie er im Wesentlichen längs der virtuellen Linie 19 gegeben ist. Dieser Abstand kann entweder wie bereits bezüglich Fig. 3 beschrieben durch Ermittlung der Pixelanzahl längs der Pixellinie 17 und entsprechende Berechnung des realen Abstands längs der Linie 19 ermittelt werden. Denkbar ist es aber auch, hierfür unmittelbar auf ein Abstandsmesssignal eines Abstandssensors 4 zurückzugreifen. Der Begriff "realer Abstand längs der Linie 19" ist dabei so zu verstehen, dass es letztlich ein im Wesentlichen bezogen auf diese Linie bestimmter Abstand ist, also ein Abstand, der letztlich zwischen dem Abstandsmesssensor des eigenen Fahrzeugs 1 und dem Bildpunkt 15 respektive der Hinterkante des Fahrzeugs 8 ermittelt wird. Denn wenn reale Sensormesssignale zugrunde gelegt werden, kann zwangsläufig keine punktgenaue Entfernungsbestimmung erfolgen.

Gestützt auf die Kenntnis der Größe des Winkels α sowie auf die Kenntnis des Abstands "entlang" der Linie 19 kann nun auf einfache Weise über die bekannten geometrischen Zusammenhänge der reale Abstand 24 zwischen dem Bildpunkt 15 und dem Fahrbahnmarkierungspunkt 22 errechnet werden.

Die Steuerungseinrichtung ermittelt nun wiederum zu jedem oder beispielsweise jedem zweiten oder dritten Kamerabild die entsprechenden Parameter respektive den jeweiligen realen seitlichen Abstand 24 und kann so einen möglichen Einschervorgang in die reale Fahrspur 9 sofort erkennen.

In gleicher Weise kann durch eine Winkelbetrachtung ein möglicher Ausschervorgang eines sich zwischen den Fahrspurmarkierungen 12 befindlichen Fahrzeugs 8 erfasst werden.

## Patentansprüche

1. Verfahren zur Ermittlung eines Ein- oder Ausschervorgangs eines dem eigenen Kraftfahrzeug (1) vorausfahrenden Fahrzeugs (8), wobei das eigene Kraftfahrzeug (1) ein der Längsführung dienendes Fahrerassistenzsystem (2) und eine das Fahrzeugvorfeld in Form zweidimensionaler Bilder (13) aufnehmende Kamera (7) umfasst,
**dadurch gekennzeichnet,**
**dass** in einem aufgenommenen Bild (13) wenigstens eine die eigene befahrene Fahrspur (9) begrenzende Fahrbahnmarkierung (12) und wenigstens ein von einem vorausfahrenden Fahrzeug (8) definierter Bildpunkt (15) oder Bildabschnitt detektiert wird, worauf unter Berücksichtigung eines ein Maß für den realen Abstand des Fahrzeugs (8) zum eigenen Kraftfahrzeug (1) darstellenden Werts der reale horizontale Abstand (24) des ausgezeichneten Bildpunkts (15) oder Bildabschnitts zur Fahrbahnmarkierung (12) ermittelt wird, der als Maß für die Ermittlung eines Ein- oder Ausschervorgangs dient.

2. Verfahren nach Anspruch 1,
**dadurch gekennzeichnet,**
**dass** als ausgezeichneter Bildpunkt (15) oder Bildabschnitt das im Bild (13) gezeigte untere Eck einer das Fahrzeug (8) umgebenden dargestellten oder virtuellen Bildmarkierung (14) ermittelt wird.

3. Verfahren nach Anspruch 1 oder 2,
**dadurch gekennzeichnet, dass**
dass der ein Maß für den realen Abstand darstellende Wert anhand der Anzahl an Pixeln einer vertikalen Pixellinie (17) des Bilds (13) von einer definierten horizontalen Bildlinie, insbesondere der Bildunterkante (21), zu dem detektierten Bildpunkt (15) oder Bildabschnitt des Fahrzeugs (8) ermittelt wird.

4. Verfahren nach Anspruch 1 oder 2,
**dadurch gekennzeichnet,**
**dass** der ein Maß für den realen Abstand darstellende Wert mittels wenigstens eines Abstandsmesssensors (4), insbesondere eines Radar- oder Lidarsensors ermittelt wird.

5. Verfahren nach einem der vorangehenden Ansprüche,
**dadurch gekennzeichnet,**
**dass** der reale horizontale Abstand (24) anhand der Anzahl an Pixeln einer horizontalen Pixellinie (23) des Bilds (13) von dem detektierten Bildpunkt (15) oder Bildabschnitt zur detektierten Fahrbahnmarkierung (12) ermittelt wird.

6. Verfahren nach einem der Ansprüche 1 bis 4,
**dadurch gekennzeichnet,**
**dass** der reale horizontale Abstand (24) anhand des aus dem Bild (13) ermittelten Winkels α zwischen zwei Linien (19, 25) im Bild (13), die gemeinsam von einem definierten Startpunkt (21), der insbesondere der Position der Kamera (7) entspricht, ausgehen, wobei die eine Linie (19) zu dem detektierten Bildpunkt (15) oder Bildabschnitt und die andere Linie (25) zu der Fahrspurmarkierung (12) läuft und jeweils den Bildpunkt oder Bildabschnitt und die Fahrspurmarkierung (12) auf gleicher Horizontalebene schneiden, sowie dem ermittelten realen Abstand im wesentlichen entlang der zum detektierten Bildpunkt (15) oder Bildabschnitt laufenden Linie (19) ermittelt wird.

7. Kraftfahrzeug (1) geeignet zur Durchführung des Verfahrens nach einem der vorangehenden Ansprüche, umfassend ein der Längsführung dienendes Fahrerassistenzsystem (2) mit einer Steuerungseinrichtung (3) und eine das Fahrzeugvorfeld in Form zweidimensionaler Bilder (13) aufnehmenden Kamera,
**dadurch gekennzeichnet,**
**dass** die mit der Kamera (7) kommunizierende Steuerungseinrichtung (3) zur Detektion wenigstens einer die eigene befahrene Fahrspur (9) begrenzenden Fahrbahnmarkierung (12) und wenigstens eines von einem vorausfahrenden Fahrzeug (8) definierten Bildpunkts (15) oder Bildabschnitts in einem aufgenommenen Bild (13) sowie zur Ermittlung des realen horizontalen Abstands (24) des Bildpunkts (15) oder Bildabschnitts zur Fahrbahnmarkierung (12), welcher Abstand (24) als Maß für die Ermittlung eines Ein- oder Ausschervorgangs dient, unter Berücksichtigung eines ein Maß für den realen Abstand des Fahrzeugs zum eigene Kraftfahrzeug darstellenden Werts, sowie zur Steuerung des Längsführungssystems (2) unter Berücksichtigung des Ermittlungsergebnisses ausgebildet ist.

8. Kraftfahrzeug nach Anspruch 7,
**dadurch gekennzeichnet,**
**dass** seitens der Steuerungseinrichtung (3) ein detektiertes Fahrzeug (8) mit einer vorzugsweise viereckigen Bildmarkierung (14) markierbar und der Bildpunkt (15) oder Bildabschnitt als das im Bild gezeigte untere Eck der das Fahrzeug (8) umgebenden Bildmarkierung (14) ermittelt wird.

9. Kraftfahrzeug nach Anspruch 7 oder 8,
**dadurch gekennzeichnet,**
**dass** die Steuerungseinrichtung (3) zur Ermittlung des ein Maß für den realen Abstand darstellenden Werts anhand der Anzahl an Pixeln einer vertikalen Pixellinie (17) des Bilds (13) von einer definierten horizontalen Bildlinie, insbesondere der Bildunterkante (21), zu dem detektierten Bildpunkt (15) oder Bildabschnitt des Fahrzeugs (8) ausgebildet ist.

10. Kraftfahrzeug nach Anspruch 7 oder 8,
**dadurch gekennzeichnet,**
**dass** wenigstens ein Abstandsmesssensor (4), insbesondere ein Radar- oder Lidarsensor vorgesehen und die Steuerungseinrichtung (3) zur Ermittlung des ein Maß für den realen Abstand darstellenden Werts anhand des Messsignals des wenigstens einen Abstandsmesssensors (4) ausgebildet ist.

11. Kraftfahrzeug nach einem der Ansprüche 7 bis 10,
**dadurch gekennzeichnet,**
**dass** die Steuerungseinrichtung (3) zur Ermittlung des realen horizontalen Abstand (24) anhand der Anzahl an Pixeln einer horizontalen Pixellinie (23) des Bilds (13) von dem detektierten Bildpunkt (15) oder Bildabschnitt zur detektierten Fahrbahnmarkierung (12) ausgebildet ist.

12. Kraftfahrzeug nach einem der Ansprüche 7 bis 10,
**dadurch gekennzeichnet,**
**dass** die Steuerungseinrichtung (3) zur Ermittlung des realen horizontalen Abstands (24) anhand des von ihr aus dem Bild ermittelten Winkels (α) zwischen zwei Linien (19, 25) im Bild (13), die gemeinsam von einem definierten Startpunkt (21), der insbesondere der Position der Kamera (7) entspricht, ausgehen, wobei die eine Linie (19) zu dem detektierten Bildpunkt (15) oder Bildabschnitt und die andere Linie (25) zu der Fahrspurmarkierung (12) läuft und jeweils den Bildpunkt (15) oder Bildabschnitt und die Fahrspurmarkierung (12) auf gleicher Horizontalebene schneiden, sowie dem ermittelten realen Abstand im wesentlichen entlang der zum detektierten Bildpunkt (15) oder Bildabschnitt laufenden Linie (19) ausgebildet ist.

## Claims

1. Method for determining whether a vehicle (8) in front of the driver's own motor vehicle (1) is changing lane, the driver's own motor vehicle (1) comprising a driver assistance system (2) used for longitudinal guidance and a camera (7) which records the region in front of the vehicle in the form of two-dimensional images (13), **characterised in that** at least a road marking (12) delimiting the lane (9) travelled in by the driver's own vehicle and at least an image point (15) or image portion defined by a vehicle (8) in front are detected in a recorded image (13), whereupon, taking into account a value representing a measure of the actual distance of the vehicle (8) from the driver's own motor vehicle (1), the actual horizontal distance (24) of the distinguished image point (15) or image portion from the road marking (12) is determined, which distance is used as a measure for determining a process of changing lane.

2. Method according to claim 1, **characterised in that** the lower corner, shown in the image (13), of a shown or virtual image marking (14) surrounding the vehicle (8) is determined as a distinguished image point (15).

3. Method according to either claim 1 or claim 2, **characterised in that** the value representing a measure of the actual distance is determined on the basis of the number of pixels in a vertical pixel line (17) in the image (13) from a defined horizontal image line, in particular the lower edge (21) of the image, to the detected image point (15) or image portion of the vehicle (8).

4. Method according to either claim 1 or claim 2, **characterised in that** the value representing a measure of the actual distance is determined by means of at least one distance measurement sensor (4), in particular a radar sensor or lidar sensor.

5. Method according to any of the preceding claims, **characterised in that** the actual horizontal distance (24) is determined on the basis of the number of pixels in a horizontal pixel line (23) in the image (13) from the detected image point (15) or image portion to the detected road marking (12).

6. Method according to any of claims 1 to 4, **characterised in that** the actual horizontal distance (24) is determined on the basis of the angle α, determined from the image (13), between two lines (19, 25) in the image (13) which depart together from a defined starting point (21), which in particular corresponds to the position of the camera (7), one line (19) extending to the detected image point (15) or image portion and the other line (25) extending to the lane marking (12) and the lines respectively intersecting the image point or image portion and the lane marking (12) on the same horizontal plane, and the determined actual distance substantially along the line (19) extending to the detected image point (15) or image portion.

7. Motor vehicle (1), suitable for carrying out the method according to any of the preceding claims, comprising a driver assistance system (2) comprising a control device (3) and a camera which records the region in front of the vehicle in the form of two-dimensional images (13), **characterised in that** the control device (3), which communicates with the camera (7), is designed to detect at least a road marking (12) delimiting the lane (9) travelled in by the driver's own vehicle and at least an image point (15) or image portion defined by a vehicle (8) in front in a recorded image (13) and to determine the actual horizontal distance (24) of the image point (15) or image portion from the road marking (12), which distance (24) is used as a measure for determining a process of changing lane, taking into account a value representing a measure of the actual distance of the vehicle from the driver's own motor vehicle, and to control the longitudinal guidance system (2), taking into account the result of the determination.

8. Motor vehicle according to claim 7, **characterised in that**, by the control device (3), a detected vehicle (8) can be marked with a preferably square image marking (14) and the image point (15) or image portion is detected as the lower corner, shown in the image, of the image marking (14) surrounding the vehicle (8).

9. Motor vehicle according to either claim 7 or claim 8, **characterised in that** the control device (3) is designed to determine the value representing a measure of the actual distance on the basis of the number of pixels in a vertical pixel line (17) in the image (13) from a defined horizontal image line, in particular the lower edge (21) of the image, to the detected image point (15) or image portion of the vehicle (8).

10. Motor vehicle according to either claim 7 or claim 8, **characterised in that** at least one distance measurement sensor (4), in particular a radar sensor or lidar sensor, is provided and the control device (3) is designed to determine the value representing a measure of the actual distance on the basis of the measurement signal of the at least one distance measurement sensor (4).

11. Motor vehicle according to any of claims 7 to 10, **characterised in that** the control device (3) is designed to determine the actual horizontal distance (24) on the basis of the number of pixels in a horizontal pixel line (23) in the image (13) from the detected image point (15) or image portion to the detected road marking (12).

12. Motor vehicle according to any of claims 7 to 10, **characterised in that** the control device (3) is designed to determine the actual horizontal distance (24) on the basis of the angle (α), determined from the image (13) by said control device, between two lines (19, 25) in the image which depart together from a defined starting point (21), which in particular corresponds to the position of the camera (7), one line (19) extending to the detected image point (15) or image portion and the other line (25) extending to the lane marking (12) and the lines respectively intersecting the image point (15) or image portion and the lane marking (12) on the same horizontal plane, and the determined actual distance substantially along the line (19) extending to the detected image point (15) or image portion.

## Revendications

1. Procédé de détermination d'un processus de déboîtement ou d'insertion de file d'un véhicule automobile (8) se déplaçant devant son propre véhicule automobile (1), dans lequel le propre véhicule (1) comprend un système d'assistance (2) servant au guidage longitudinal et un appareil photo (7) enregistrant le champ avant du véhicule sous la forme d'images à deux dimensions (13),
**caractérisé en ce que**,
dans une image enregistrée (13), on détecte au moins
un marquage de route (12) délimitant sa propre voie de circulation parcourue (9) et au moins un point d'image (15) ou une section d'image défini(e) par un véhicule (8) se déplaçant devant, après quoi, en tenant compte d'une valeur représentant une mesure de la distance réelle du véhicule (8) à son véhicule propre (1), on détermine la distance horizontale réelle (24) du point d'image (15) ou de la section d'image affiché(e) au marquage de route (12), qui sert de mesure pour la détermination d'un processus de déboîtement ou d'insertion de file.

2. Procédé selon la revendication 1,
**caractérisé en ce que**
l'on détermine comme point d'image (15) ou section
d'image affiché(e) l'angle inférieur, représenté dans l'image (13), d'un marquage d'image (14) représenté ou virtuel entourant le véhicule (8).

3. Procédé selon la revendication 1 ou la revendication 2,
**caractérisé en ce que**
l'on détermine la valeur représentant une mesure de la distance réelle sur la base du nombre de pixels d'une ligne de pixels verticale (17) de l'image (13) d'une ligne d'image horizontale définie, en particulier du bord inférieur (21) de l'image, au point d'image (15) ou à la section d'image détecté(e) du véhicule (8).

4. Procédé selon la revendication 1 ou la revendication 2,
**caractérisé en ce que**
l'on détermine la valeur représentant une mesure de la distance réelle au moyen d'au moins un capteur de mesure de distance (4), en particulier d'un capteur de type radar ou lidar.

5. Procédé selon l'une quelconque des revendications précédentes,
**caractérisé en ce que**
l'on détermine la distance horizontale réelle (24) sur la base du nombre de pixels d'une ligne de pixels horizontale (23) de l'image (13) du point d'image (15) ou de la section d'image détecté(e) au marquage de route (12) détecté.

6. Procédé selon l'une quelconque des revendications 1 à 4,
**caractérisé en ce que**
l'on détermine la distance horizontale réelle (24) sur la base de l'angle α tiré de l'image (13) entre deux lignes (19, 25) de l'image (13), qui partent conjointement d'un point initial défini (21), qui correspond en particulier à la position de l'appareil photo (7), dans lequel la première ligne (19) s'étend jusqu'au point d'image (15) ou jusqu'à la section d'image détecté(e) et l'autre ligne (25) s'étend jusqu'au marquage de route (12) et coupent respectivement le point d'image ou la section d'image et le marquage de route (12) dans le même plan horizontal, ainsi que la distance réelle déterminée sensiblement le long de la ligne (19) s'étendant jusqu'au point d'image (15) ou jusqu'à la section d'image détecté(e).

7. Véhicule automobile (1) convenant à la réalisation du procédé selon l'une quelconque des revendications précédentes, comprenant un système d'assistance au conducteur (2) servant au guidage longitudinal avec un dispositif de commande (3) et un appareil photo enregistrant le champ avant du véhicule sous la forme d'images à deux dimensions (13),
**caractérisé en ce que**
le dispositif de commande (3) communiquant avec l'appareil photo (7) est conformé pour la détection d'au moins un marquage de route (12) délimitant sa propre voie de circulation parcourue (9) et au moins d'un point d'image (15) ou d'une section d'image défini(e) par un véhicule (8) se déplaçant devant soi, dans une image enregistrée (13), ainsi que pour la détermination de la distance horizontale réelle (24) du point d'image (15) ou de la section d'image au marquage de route (12), laquelle distance (24) sert de mesure pour la détermination d'un processus de déboîtement ou d'échange de file, en tenant compte d'une valeur représentant une mesure de la distance réelle du véhicule à son propre véhicule, ainsi que pour la commande du système de guidage longitudinal (2) en tenant compte du résultat de la détermination.

8. Véhicule automobile selon la revendication 7,
**caractérisé en ce que**,
du côté du dispositif de commande (3), un véhicule détecté (8) avec un marquage d'image de préférence rectangulaire (14) peut être repérable et l'on détermine le point d'image (15) ou la section d'image comme l'angle inférieur, représenté dans l'image, du marquage d'image (14) entourant le véhicule (8).

9. Véhicule automobile selon la revendication 7 ou la revendication 8,
**caractérisé en ce que**
le dispositif de commande (3) est conformé pour déterminer la valeur représentant une mesure de la distance réelle sur la base du nombre de pixels d'une ligne de pixels verticale (17) de l'image (13) d'une ligne d'image horizontale définie, en particulier le bord inférieur (21) de l'image, au point d'image détecté (15) ou à la section d'image détectée du véhicule (8).

10. Véhicule automobile selon la revendication 7 ou la revendication 8,
**caractérisé en ce que**
il est prévu au moins un capteur de mesure de distance (4), en particulier un capteur de type radar ou lidar, et le dispositif de commande (3) est conformé pour déterminer la valeur représentant une mesure de la distance réelle sur la base du signal de mesure du au moins un capteur de mesure de distance (4).

11. Véhicule automobile selon l'une quelconque des revendications 7 à 10,
**caractérisé en ce que**
le dispositif de commande (3) est conformé pour déterminer la distance horizontale réelle (24) sur la base de la quantité de pixels d'une ligne de pixels horizontale (23) de l'image (13) du point d'image détecté (15) ou de la section d'image détectée au marquage de route détecté (12).

12. Véhicule automobile selon l'une quelconque des revendications 7 à 10,
**caractérisé en ce que**
le dispositif de commande (3) est conformé pour déterminer la distance horizontale réelle (24) sur la base de l'angle (α) tiré de l'image par le dispositif entre deux lignes (19, 25) dans l'image (13) qui partent conjointement d'un point initial défini (21), qui correspond en particulier à la position de l'appareil photo (7), dans lequel la première ligne (19) s'étend jusqu'au point d'image (15) ou jusqu'à la section d'image détecté(e) et l'autre ligne (25) s'étend jusqu'au marquage de route (12) et coupent respectivement le point d'image (15) ou la section d'image et le marquage de route (12) dans le même plan horizontal, ainsi que la distance réelle déterminée sensiblement le long de la ligne (19) s'étendant jusqu'au point d'image (15) ou jusqu'à la section d'image détecté(e).
